Europäisches Patentamt

(19) European Patent Office

Office européen des brevets

(11) Publication number: 0 134 060
B1

(12) EUROPEAN PATENT SPECIFICATION

(45) Date of publication of patent specification: 13.07.88

(51) Int. Cl.⁴: B 65 G 47/66

(21) Application number: 84201148.8

(22) Date of filing: 06.08.84

(54) A conveying device for bottles or the like.

(30) Priority: 05.08.83 NL 8302777

(43) Date of publication of application:
13.03.85 Bulletin 85/11

(45) Publication of the grant of the patent:
13.07.88 Bulletin 88/28

(84) Designated Contracting States:
BE DE FR GB NL

(56) References cited:
DE-B-1 291 282
DE-B-1 291 682
US-A-1 715 204

(73) Proprietor: Speciaal-Machinefabriek J.H. van
Uitert B.V.
Industriestraat 14-16
NL-5107 NC Dongen (NL)

(72) Inventor: van Uitert, Johannes Hendrikus
33 Vaartweg
NL-5109 RB 's-Gravenmoer (NL)

(74) Representative: Lips, Hendrik Jan George, Ir.
et al
HAAGSCH OCTROOIBUREAU Breitnerlaan 146
NL-2596 HG Den Haag (NL)

EP 0 134 060 B1

Courier Press, Leamington Spa, England.

## Description

For moving bottles, tins or the like in factories, as internal state of the art conveying devices are used, comprising single or multiple plate chains guided by end wheels, each plate-shaped link thereof being hingedly connected to an adjacent link at a central portion thereof, and extending laterally on both sides of said hinge point, said chains being supported between the end wheels on sliding tracks, and, where such a chain adjoins another chain or transport means, an overflow plate is arranged which joins as smoothly as possible said chain or the like (preamble of claim 1).

In the past years such conveying devices were manufactured in the plant of applicant. A difficulty with such plate chains was that they apply themselves as a polygon around an end wheel, so that at the transition between the straight portion of the chain and a link of it commencing his deflection, is caused a rather abrupt change of direction reacting on the overflow plate which resiliently bears on the link. Particularly at the leading side of the overflow plate this may result in bottles falling over and, because of the continued up-and-down movement of the overflow plate, glass fragments and dirt lying on the chain can get between this plate and the chain.

It is an object of the invention to improve such a conveying device, and the device according to the invention is characterized in that the end wheels at the location of the overflow plate are disposed with their circumference lower than the plane of the sliding tracks, the latter having, at their extremities near said end wheels, a curvature towards the plane tangential to the circumference of the end wheel, said overflow plate being arranged substantially in line with the straight portion of the sliding tracks, and a terminal edge of a ramp portion bridging the gap between the overflow plate and the sliding tracks bearing on the links as they commence their deflection around the end wheel, such that the deflection of the link will take place below the overflow plate at distance sufficient to avoid an appreciable influence on the position of the overflow plate.

As a consequence of the lower position of the end wheels and the adapted shape of the sliding tracks, the hinge point of two links is lowered so that it will lie outside the area of the overflow plate, so that this will not or hardly be influenced by the movement of the chain. By this falling over of objects to be moved is avoided, in particular at the leading edge of the overflow plate.

In order to facilitate the transfer of objects towards the overflow plate the leading edge of this, both sides of the portion bearing on the hinges of the plate-chain, are provided with bevels in the direction of movement. Said bevels, at the same time, avoid that the lateral edges of a plate-shaped link will strike at both sides of the hinges against the leading edge of the overflow plate.

The nearest published state of the art is US—A—1,715,204. This publication shows an overflow device positioned between a supply conveyor comprising a series of spaced parallel rollers and a conveyor comprising a flexible supporting member extending over a roller, the upper surface of said supporting member being located in a plane which is tangent to the highest portions of the rollers of the supply conveyor. The overflow device consists of two elements, each comprising a plurality of spaced parallel supporting members of bar-like form, positioned such that the members of one element are lying between the members of the other element. The elements can be moved to and fro and up and down in such a way that the objects leaving the supply conveyor are moved stepwise by the one and then by the other element to the other conveyor.

In view of the fact that the diameter of the rollers of the supply conveyor is relatively small in respect of the supporting surface of the objects no difficulties arise when carrying over the objects from the rollers onto the overflow device. The other end of the overflow device is shaped such that it suits the diameter of the roller over which the flexible supporting member of the conveyor extends. Thus, at that place no difficulties arise when moving the objects from the overflow device onto the discharge conveyor.

The invention will be elucidated in more detail by reference to a drawing, showing in:

Fig. 1 a lateral view of two adjoining and portions of conveyor chains and an intermediate overflow plate;

Fig. 2 a top view of the portion of Fig. 1; and

Fig. 3 a top view of two links of a conveyor chain with plate-shaped links for such a device.

In the drawing two aligned conveyor tracks 1 and 2 are diagrammatically shown. These tracks consist of a number of juxtaposed chains 3 consisting of plate-shaped links 4 which are separately shown in Fig. 3. These links are connected, in the central part at 5, to an adjacent link 4, free edges 6 extending laterally of the hinge parts 5.

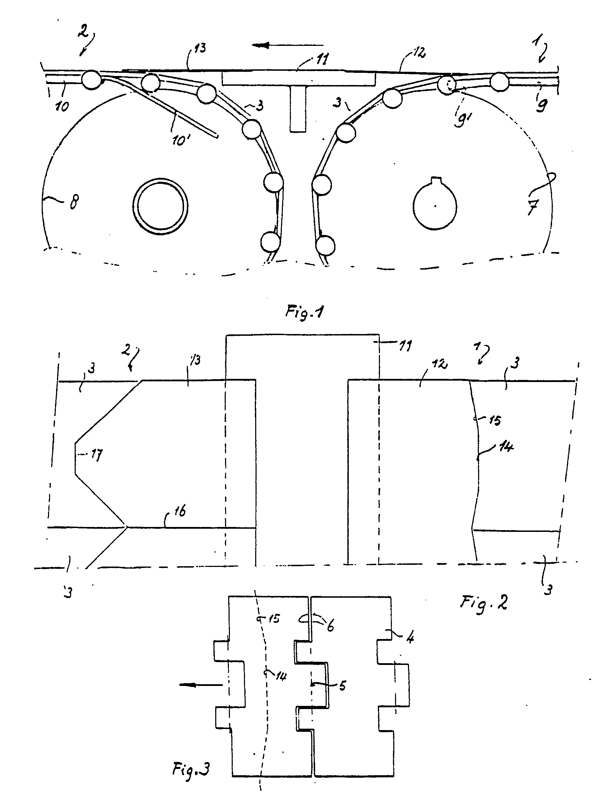

These chains are guided by end wheels, and in Fig. 1 an end wheel 7 for a conveyor track 1 is a driving wheel, whereas the adjacent end wheel 8 of the conveyor track 2 is a return wheel. Furthermore the chain links are guided between the end wheels on sliding rails 9 and 10 resp., which horizontally support the chain links and prevent them to sag.

As appears from Fig. 1, the wheels 7 and 8 are at a lower level than the horizontal plane through the straight portions of the rails 9 and 10. The rails 9 for supporting the chains of this conveyor track 1 terminate in a curved extremity 9' which is directed so that the chains 3 guided on the rails 9 are directed towards the circumferential surface of the wheels 7. Near the wheels 8 the corresponding rails 10 possess similarly curved extremities 10' which take up the chain links leaving the wheels 8, and guide them towards the corresponding sliding rails 10.

Above the wheels 7 and 8 an overflow plate 11 is arranged having leading and trailing ramp portions 12 and 13 resp. This plate is disposed horizontally and substantially in line with the straight portions of the sliding rails 9 and 10. The terminal edge of the leading ramp portion then bears on the chain 3 of track 1 where these chains have just left the straight portions of the sliding rails 9, and have arrived in the curved portion 9', and in the rear ramp portion 13 of the overflow plate the terminal edge of the overflow plate bears on the chains 3 of track 2 where these chains nearly have reached the straight portion of the sliding rails 10.

As clearly follows from Fig. 1, the articulation point of the links of the chains, where the latter apply themselves as a polygon around the wheels 7 and 8 in question, is shifted downwards and below the overflow plate 11, so that this plate will not or hardly be influenced by the changes of direction of the chain 3, and the overflow plate will, furthermore, be in line with the sliding rails 9 and 10, so that a smooth movement of the object to be transported by the conveyor tracks is obtained.

As follows from Fig. 2 and 3, at both sides of the portion 14 bearing on the hinge portion of the chains 3 in question, the terminal edge of the leading ramp portion 12 is provided with bevels 15. These bevels facilitate the transfer of an object being carried on a link 4 towards the ramp portion 12 of the overflow plate 11, and, furthermore, it is avoided that the edges 6 at the leading side of an approaching link 4 would strike against the terminal edges of the leading ramp portion. Also the transfer of fragments or the like onto the ramp portion 12 is facilitated thereby, and it is thus avoided that fragments would arrive between the plates 11 and the wheels 7 and 8.

The leading ramp portion 12 can consist of a single plate, since the wheels 7 are driving wheels having mutually aligned teeth. At the wheels 8 the latter is not necessarily the case with wheels belonging to different chains 3, as these chains can have a different stretch, and the wheels 8 are freely rotatable on their shaft so that, at this extremity of the track 2, some differences between adjacent chains can occur. Therefore the trailing ramp portion 13 of the overflow plate 11 is provided with incisions between adjacent chains as shown at 16, so that the terminal edges 17 bearing on the hinge portions 5 of the chains in question can move independently from one another when a chain passes therebelow.

In this manner an interconnection between two conveyor tracks 1 and 2 is obtained, and the risk that objects moved thereby will fall over in the region of the overflow plate 11 is considerably reduced thereby.

## Claims

1. A conveying device, comprising single or multiple plate chains (3) guided by end wheels (7, 8), each plate-shaped link (4) thereof being hingedly connected to an adjacent link at a central portion thereof, and extending laterally on both sides of said hinge point, said chains (3) being supported between the end wheels on sliding tracks (9, 10), and, where such a chain adjoins another chain or transport means, an overflow plate (11) is arranged which joins as smoothly as possible said chain or the like, characterized in that the end wheels (7, 8) at the location of the overflow plate (11) are disposed with their circumference lower than the plane of the sliding tracks (9, 10), the latter having, at their extremities near said end wheels (7, 8), a curvature towards the plane tangential to the circumference of the end wheel, said overflow plate (11) being arranged substantially in line with the straight portion of the sliding tracks (9, 10), and a terminal edge (14, 15, 17) of a ramp portion (12) bridging the gap between the overflow plate (11) and the sliding tracks bearing on the links as they commence their deflection around the end wheel, such that the deflection of the link (4) will take place below the overflow plate (11) at distance sufficient to avoid an appreciable influence on the position of the overflow plate (11).

2. A device according to claim 1, characterized in that the leading edge of the overflow plate (11) at both sides of the portion (14) bearing on the hinges (5) of the plate-chain (3) is provided with bevels (15) in the direction of movement.

## Patentansprüche

1. Fördervorrichtung umfassend über Endräder (7, 8) geführte einfache oder mehrfache Plattenketten (3), deren plattenförmige Kettenglieder (4) in der Mitte an benachbarten Kettengliedern angelenkt sind und sich seitlich beiderseits dieser Gelenkpunkte erstrecken, wobei die genannten Ketten (3) zwischen den Endrädern auf Gleitbahnen (9, 10) unterstützt sind, und dort wo eine derartige Kette an eine andere Kette oder an ein anderes Fördermittel anschliesst, eine Ueberlaufplatte (11) angeordnet ist, die möglichst glatt an die Kette oder dergleichen anschliesst, dadurch gekennzeichnet, dass die Endräder (7, 8) an der Stelle der Ueberlaufplatte (11) mit ihrem Umfang niedriger als die Ebene der Gleitbahnen (9, 10) liegen, welche letzten an ihren Enden nahe den genannten Endrädern (7, 8) eine Krümmung zu der Tangentialebene an dem Endradumfang hin aufweisen, wobei die Ueberlaufplatte (11) im wesentlichen in der Verlängerung des geraden Teiles der Gleitbahnen (9, 10) liegt und ein Endrand (14, 15, 17) eines Auflaufteiles (12), der den Zwischenraum zwischen der Ueberlaufplatte (11) und den Gleitbahnen überbrückt, auf den Kettengliedern ruht wo sie ihre Abbiegung um das Endrad herum anfangen, derart dass die Abbiegung der Kettenglieder (4) unterhalb der Ueberlaufplatte (11) in einem genügenden Abstand erfolgt um keinen merkbaren Einfluss auf die Lage der Ueberlaufplatte (11) zu haben.

2. Vorrichtung gemäss Anspruch 1, dadurch gekennzeichnet, dass die Auflaufseite der Ueberlaufplatte (11) beiderseits des auf den Gelenken (5) der Plattenkette (3) ruhenden Teiles (14) mit in der Förderrichtung verlaufenden Abschrägungen (15) versehen ist.

## Revendications

1. Dispositif transporteur, comprenant des chaines à plateaux simples ou multiples (3) guidées par des roues de bout (7, 8), chacun de leurs maillons en forme de disque (4) étant relié de façon articulée à un maillon adjacent au niveau d'une partie centrale de celui-ci, et s'étendant latéralement des deux côtés dudit point d'articulation, lesdites chaînes (3) étant soutenues entre les roues de bout sur des glissières (9, 10) et, là où une de ces chaînes ajointe une autre chaîne ou moyen transporteur, une plaque de débordement (11) est placée qui rejoint aussi régulièrement que possible ladite chaîne ou analogue, caractérisé en ce que les roues de bout (7, 8) à l'emplacement de la plaque de débordement (11) sont placées avec leur circonférence inférieure au plan des glissières (9, 10), ces dernières ayant, au niveau de leurs extrémités près desdites roues de bout (7, 8), une courbure vers le plan tangentiel à la circonférence de la roue de bout, ladite plaque de débordement (11) étant placée sensiblement en ligne avec la partie droite des glissières (9, 10), et un bord terminal (14, 15, 17) d'une partie de rampe (12) établissant un pont sur le vide entre la plaque de débordement (11) et les glissières s'appuyant sur les maillons alors qu'ils commencement leur déflexion autour de la roue de bout, de sorte que la déflexion du maillon (4) se produit au-dessous de la plaque de débordement (11) à une distance suffisante pour éviter une influence notable sur la position de la plaque de débordement (11).

2. Dispositif selon la revendication 1, caractérisé en ce que le bord avant de la plaque de débordement (11) au niveau des deux côtés de la partie (14) s'appuyant sur les articulations (5) de la chaîne à plateaux (3) comprend des biseaux (15) dans le sens du mouvement.

Fig.1

Fig.2

Fig.3